# EUROPEAN PATENT APPLICATION

(11) **EP 1 884 931 A1**
(43) Date of publication of application: **06.02.2008**
(21) Application number: 06255832.5
(22) Date of filing: 14.11.2006
(51) Int. Cl.: G11B 5/60, G11B 5/31

(54) **Magnetic head**

(30) Priority: 27.07.2006 JP 2006204313
(71) Applicant: Fujitsu Ltd., Kawasaki-shi, Kanagawa 211-8588 (JP)
(72) Inventor: Aoki, Kenichiro, c/o Fujitsu Limited, Kawasaki-shi, Kanagawa 211-8588 (JP); Nakada, Toshiyuki, c/o Fujitsu Limited, Kawasaki-shi, Kanagawa 211-8588 (JP)
(74) Representative: Stebbing, Timothy Charles

(57) **Abstract**

A magnetic head (18) has a read head (36) in which a read element which converts recording magnetic flux emitted from a magnetic disk (14) into an electric signal is disposed between a pair of shield layers (42, 44) on a substrate (34), and a write head (38) which magnetically records information by emitting magnetic flux generated by a write current flowing through a write coil (54) from a magnetic pole unit to the magnetic disk (14). A heater coil (60) faces the write coil (54) via an insulating layer, and a medium facing surface (40) is caused to protrude toward the disk (14) by thermal expansion caused by driving the heater coil (60). Adjacent to the shield layer on the substrate side, a low thermal conducting layer (64) is provided, made of a material having a low thermal conductivity which suppresses transmission of the heat caused by electric current in the heater coil. A low thermal expansion layer (64) is disposed between the substrate and the low thermal conducting layer and is made of a material having a low thermal expansion coefficient.

## Description

This application claims priority based on prior application No.JP 2006-204313, filed July 27, 2006, in Japan.

The present invention relates to a magnetic head which can control the clearance between itself and a recording medium by varying the protruding distance of a medium facing surface by thermal expansion accompanying power distribution to and heating of a heater coil, and particularly relates to a magnetic head which can obtain a large protruding distance of a medium facing surface with little electric power of a heater coil.

Conventionally, the flying height of a magnetic head with respect to a recording surface of a magnetic disk has to be reduced in order to realize a high recording density of a magnetic disk apparatus; and, recently, flying heights of 10 nm order have been realized. However, there is a problem that collisions with minute protrusions on the magnetic disk surface readily occur when the flying height of the magnetic head is reduced, and variations in the clearance of heads are present in the range of common differences (e.g. manufacturing tolerences) of mechanisms; therefore, when contact with the medium is taken into consideration, flying heights smaller than the common differences cannot be set. To address the above problems, methods have been proposed in which a heater is built in a head and the clearance between the head and a recording surface of a magnetic disk is controlled by utilizing a protruding phenomenon of a head flying surface caused by thermal expansion accompanying electric power distribution to the heater.

In JP2003-303405, a thin film resistive element which functions as a heater is formed in an insulating layer of a thin film magnetic head, and electric power is distributed to the thin film resistive element as needed so as to heat the element, thereby causing a magnetic pole distal end portion to thermally expand and protrude.

In JP2004-192665, with respect to increase in an apparatus temperature and an element temperature due to recording/reproduction, the electric power applied to an electric conductive film provided in a head is changed so as to maintain a constant element temperature, thereby maintaining a constant clearance between the element and a recording medium.

In JP2005-078706, a first heating device is provided for increasing flying height which causes a part of an air bearing surface of a head to expand and protrude by heating so as to increase the distance between a recording/reproducing element and a magnetic disk surface; and a second heating device is provided for reducing flying height by causing another part of the head air bearing surface to expand and protrude by heating so as to reduce the distance between the recording/reproducing element and the magnetic disk surface The flying height is corrected such that reproduction can be performed without causing collision, for example, upon activation of the apparatus.

These proposals have the drawback that the heat generated by electric power distribution to a heater coil is transmitted to the substrate side of the magnetic head, which is formed as a slider, and dissipated to the medium facing surface, and the medium facing surface side in which a write gap which functions as a recording element of a write head and a read gap where a reading element is disposed are disposed cannot be efficiently heated and protruded. Therefore, the degree of protrusion caused by thermal expansion is increased by increasing the electric power in the heater coil. However, there is a problem that, when the temperature of the heater coil is excessively increased by the electric power distribution, migration of the heater coil and influence of heat on a read element and a write element become large, and durability and performance of the magnetic head is deteriorated.

As a conceivable measure for solving such a problem, a structure which prevents dissipation of the heat caused by the electric power distribution to the heater coil is provided in the head. However, when the heat from the heater coil is not readily dissipated, there is a problem that the medium facing surface is caused to protrude by the ambient temperature and heat generated in the write coil even if no power is fed to the heater coil, when write electric power is increased under a high-temperature environment. In addition, the protruding distance caused by the ambient temperature and the heat generation of the write coil is further increased since heat is not readily dissipated to the substrate side.

Generally, regarding the designed value of the clearance between the magnetic head and a medium surface, when the upper-limit value of the usable temperature range of a magnetic disk apparatus is, for example, 60°C, the temperature in the chassis thereof is higher than that at about 70°C. Worst-case conditions wherein a AC current flows through the write coil under the high-temperature environment of 70°C are set to measure the protruding distance of the head, and the designed value of the clearance is determined based on the protruding distance under the worst-case conditions so that contact/collision with the medium does not occur.

However, when the structure in which heat is not readily dissipated from the heater coil is employed in a head, the head protruding distance under the worst-case conditions is increased; therefore, the designed value of the clearance for avoiding contact/collision with the medium has to be increased. When the designed value of the clearance is increased in this manner, the protruding distance caused by heater power distribution has to be further increased. Therefore, the heater electric power has to be increased, and there is a problem that, even when the structure in which heat is not readily dissipated is used, improving the heater efficiency is difficult after all.

Furthermore, recently, in contrast to a conventional flying-type head, a magnetic disk apparatus using a contact-type head which establishes access in the state in which a head is in contact with a medium surface has been proposed. Also for such contact-type magnetic head, conceivable heater control which maintains contact with the medium surface is performed by disposing a heater coil in the head, flowing current therein to heat it, and causing a medium contact surface to protrude by thermal expansion. In contact control performed by the heater coil of such contact-type magnetic head, the clearance between the head and the medium is in the dimension of an atomic level. In such a circumstance, both of them attract each other by atomic force, i.e., Coulomb's force generated in interactions between the atoms in the head and the atoms in the medium. Therefore, in the contact-type magnetic head, the contact state has to be maintained by a head actuator such that the balance of the Coulomb's force between the head and the medium is maintained.

However, when the protruding distance is controlled by electric power distribution to the heater coil in the dimension in which the Coulomb's force acts, the entire medium facing surface of the head is protruded to the medium side centrally from the part of the write coil heated by the heater coil. Therefore, there is a problem that the facing area of the head side where the Coulomb's force is generated between the area and the medium is increased, the Coulomb's force is increased, the balance of the head actuator is broken, and the head is pressed against the medium surface by a strong force.

It is therefore desirable to provide a magnetic head having a structure of high heater efficiency wherein a medium facing surface can be made to protrude markedly with little electric power fed to a heater coil.

It is also desirable to provide a magnetic head having a structure which can ensure heater efficiency by reducing the clearance at the design stage by reducing the protruding distance of a medium facing surface under a high-temperature environment and a worst-case environment wherein write electric power is large.

Furthermore, it is desirable to provide a magnetic head which can appropriately perform protrusion control of a medium facing surface by electric power distribution of a heater coil in a contact-type head wherein Coulomb's force is a problem.

According to one aspect of the present invention, there is provided a magnetic head in which a read head in which a reading element which converts recording magnetic flux emitted from a recording medium into an electric signal is disposed between a pair of shield layers, and a write head which magnetically records information by emitting magnetic flux generated by a write current flowing through a write coil from a magnetic pole unit to the recording medium, are sequentially disposed (stacked) on a substrate; wherein the magnetic head is characterized by having
a heater coil which is disposed via an insulating layer with respect to the write coil and causes a medium facing surface to protrude toward the recording medium by thermal expansion caused by electric power distribution and heating;
a low thermal conducting layer which is disposed subsequent to (formed on) the shield layer in the substrate side in the read head and is made of a material having a low thermal conductivity which suppresses transmission of heat caused by electric power distribution to and heating of the heater coil; and
a low thermal expansion layer which is located to the substrate side of the low thermal conducting layer and is made of a material having a low thermal expansion coefficient.

Preferably, the low thermal conducting layer comprises silicon oxide (SiO₂) or a resin material. The low thermal expansion layer comprises at least any one of silicon carbide (SiC), silicon nitride (Si₃N₄), silicon oxide (SiO₂), aluminium nitride (AlN), tungsten (W), molybdenum (M), and an invar material.

The low thermal expansion layer preferably has a thermal expansion coefficient of 0.0/K to 7.5E-6/K (=0.0/K to 7.5 x 10⁻⁶/K). The low thermal conducting layer may have a thermal conductivity of 0.1 W/m to 1.5 W/m.

Another aspect of the present invention provides a magnetic head in which a read head in which a reading element which converts recording magnetic flux emitted from a recording medium into an electric signal is disposed between a pair of shield layers, and a write head which magnetically records information by emitting magnetic flux generated by a write current flowing through a write coil from a magnetic pole unit to the recording medium, are sequentially disposed (successively formed) on a substrate; wherein the magnetic head is characterized by having
a heater coil which is disposed via an insulating layer to face the write coil and causes a medium facing surface to protrude toward the recording medium side by thermal expansion caused by electric power distribution and heating; and
a low thermal conducting layer which is disposed subsequent to (formed over) the shield layer in the substrate side in the read head and is made of a material having a low thermal conductivity which suppresses transmission of heat caused by electric power distribution to and heating of the heater coil.

Preferably, the low thermal conducting layer comprises silicon oxide (SiO₂) or a resin material. The low thermal conducting layer has a thermal conductivity of 0.1 W/m to 1.5 W/m.

Another aspect of the present invention provides a magnetic head in which a read head in which a reading element which converts recording magnetic flux emitted from a recording medium into an electric signal is disposed between a pair of shield layers, and a write head which magnetically records information by emitting magnetic flux generated by a write current flowing through a write coil from a magnetic pole unit to the recording medium, are sequentially disposed (formed adjacent one another) on a substrate; wherein the magnetic head is characterized by having
a heater coil which is disposed via an insulating layer with respect to the write coil and causes a medium facing surface to protrude toward the recording medium by thermal expansion caused by electric power distribution and heating; and
a low Young's modulus layer which is disposed subsequent to the shield layer in the substrate side in the read head and made of a material which is readily deformed by thermal expansion and has a low Young's modulus.

Furthermore, a low thermal expansion layer which is located to the substrate side of the low Young's layer and made of a material having a low thermal expansion coefficient may be provided.

Herein, the low Young's modulus layer may comprise any of resist, polyimide, and amorphous fluorocarbon polymer. The low Young's modulus layer preferably has a Young's modulus of 1 GPa to 50 GPa.

The low Young's modulus layer may cause the medium facing surface including the reading element and the recording element to locally protrude with respect to the substrate side by electric power distribution to and heating of the heater coil.

The low Young's modulus layer may act to maintain a contact state with the medium by causing the medium facing surface including the reading element and the recording element to locally protrude toward the medium by electric power distribution to and heating of the heater coil.

In embodiments of the present invention, the low thermal conducting layer made of a material having a low thermal conductivity blocks the conduction path of heat from the heater coil. As a result, such heat can be sealed in (confined to) the medium facing surface side in which the recording element (write gap) and the reading element (read gap) are present so as to sufficiently and centrally heat the write coil, and a significant amount of protrusion can be generated by small electric power so as to enhance heater efficiency.

At the same time, the low thermal expansion layer made of a material having a low thermal expansion coefficient is disposed in the substrate side subsequent to (over) the low thermal conducting layer. As a result, the heat transmitted by the low thermal conducting layer from the heater coil can be suppressed, and, at the same time, since the thermal expansion coefficient is low with respect to applied heat, the low thermal expansion layer functions as a fixed body which is not much deformed with respect to thermal expansion. By virtue of the presence of this fixed body, the protruding distance of the medium facing surface in which the recording element (write gap) and the reading element (read gap) are present is suppressed.

Therefore, the amount of protrusion of the medium facing surface in a high-temperature environment and under worst-case conditions in which write electric power is large can be limited. Since the protruding distance under the worst-case conditions is suppressed, even in the structure in which the low thermal conducting layer is provided to enhance heater efficiency, the set value of the clearance which is set for avoiding collision with the medium surface is not required to be large, and the medium facing surface can be caused to protrude at good heater efficiency without increasing the heater electric power.

Another feature of the present invention, mainly for improving the heater efficiency, is to provide a low thermal conducting layer made of a material having a low thermal conductivity in the heat conduction path between the heater coil and the substrate. As a result, the influence of the heater coil can be restricted to a region of the medium facing surface in which the recording element (write gap) and the reading element (read gap) are present so as to sufficiently and centrally heat the write coil, and the heater efficiency can be enhanced by causing the medium facing surface to protrude using a small heater electric power.

Furthermore, in another feature of the present invention, the low Young's modulus layer made of a material which is readily deformed in thermal expansion and has a low Young's modulus is provided adjacent to the shield layer in the substrate side in the read head. As a result, the medium facing surface side, caused to protrude by thermal expansion caused by electric power distribution to and heating of the heater coil, and in which the recording element and the reading element are present, is disposed via the flexible low Young's modulus layer which is readily deformed with respect to the substrate side serving as a fixed side. Therefore, the medium facing surface side which is divided from the low Young's modulus layer and in which the recording element and the reading element are present is locally protruded, the area of the medium facing surface between the medium side is suppressed to requisite minimum, increase in the Coulomb's force caused by protrusion is reduced, and the protruding distance can be appropriately controlled without breaking the balance of the head actuator which maintains a contact state.

The above and other features and advantages of the present invention will become more apparent from the following detailed description with reference to the drawings, in which:
FIG. 1 is an explanatory drawing of a magnetic disk apparatus in which a magnetic head of the present invention is used;
FIG. 2 is a cross sectional view showing an embodiment of the magnetic head according to the present invention;
FIG. 3 is an explanatory drawing of a protruding state caused by thermal expansion when power is distributed to heater coil;
FIG. 4 is a perspective view showing the present embodiment without an insulating layer;
FIG. 5 is a cross sectional view showing fig. 4 cut at the center position;
FIG. 6 is a perspective view showing disposition of the heater coil with the write coil of FIG. 4 removed;
FIG. 7 is a cross sectional view showing another embodiment of the magnetic head according to the present invention wherein merely the low thermal conducting layer is disposed;
FIG. 8 is a cross sectional view showing a magnetic head of a basic shape not having the low thermal conducting layer and the low thermal expansion layer as a comparative example;
FIG. 9 is an explanatory drawing showing protruding positions of the present embodiment with respect to the position of the medium facing surface in a high-temperature power-distributed state in comparison with a comparative example;
FIG. 10 is an explanatory drawing showing protruding positions of the present embodiment when the heater coil is fed with power and heated in the high-temperature power-distributed state of FIG. 9 in comparison with a comparative example;
FIG. 11 is an explanatory drawing in which a piezoelectric sensor structure using aluminium nitride in the low thermal expansion layer is disposed and used as a collision sensor;
FIG. 12 is a cross sectional view of another embodiment according to the present invention in which a low young's modulus layer is disposed;
FIG. 13 is an explanatory drawing of a protruding state caused by thermal expansion when power is distributed to the heater coil of the embodiment of FIG. 12;
FIG. 14 is a cross sectional view of another embodiment according to the present invention wherein a low thermal expansion layer is disposed subsequent to the low young's modulus layer;
FIG. 15 is an explanatory drawing showing protruding positions of the embodiments of FIG. 12 and FIG. 14 with respect to the position of the medium facing surface in a high-temperature power-distributed state in comparison with a comparative example; and
FIG. 16 is an explanatory drawing showing protruding positions of the embodiments of FIG. 12 and FIG. 14 when the heater coil is fed with power and heated in a high-temperature power-distributed state of FIG. 14 in comparison with a comparative example.

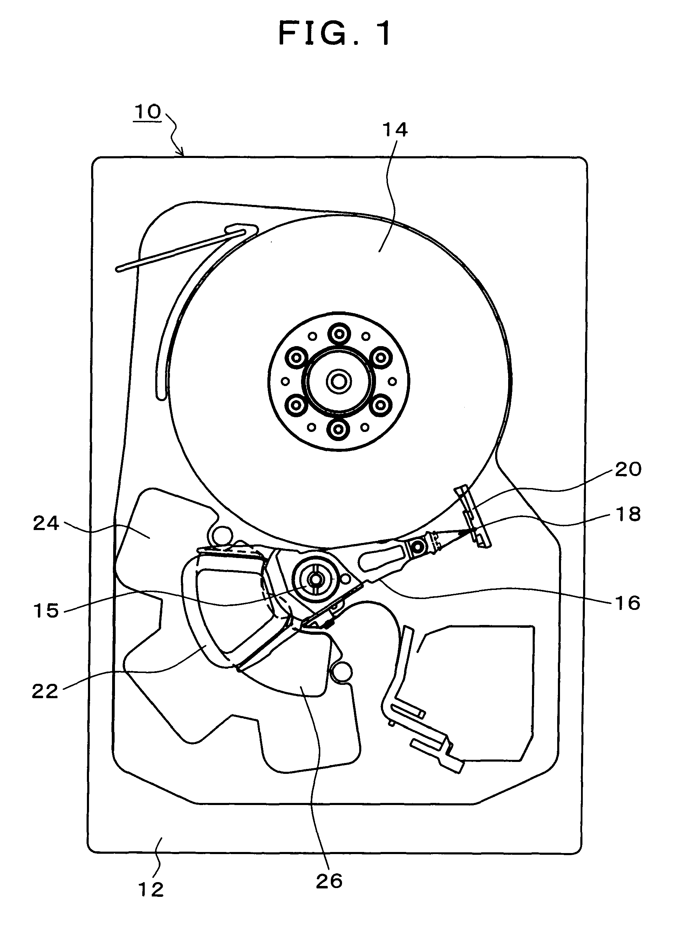

FIG. 1 is an explanatory drawing of a magnetic disk apparatus in which a magnetic head of the present invention is used. In FIG. 1, in the magnetic disk apparatus 10, the internal structure of a chassis base 12 from which a chassis cover is removed is shown. In the chassis base 12, a magnetic disk 14 which is rotated by a spindle motor at a constant speed is provided, and, for the magnetic disk 14, a rotary actuator 16 is rotatably mounted on a shaft unit 15. The rotary actuator 16 supports the magnetic head according to the present invention at its distal end, and a coil 22 is disposed in a rear part thereof. The coil 22 is rotatable along a magnet 26 on a lower yoke 24 which is fixed to the chassis base 12 side. Although an upper yoke which is not shown and has the same shape as the lower yoke 24 is disposed above the coil 22, the state in which the upper yoke is removed is shown in the Figure. A magnetic circuit unit is formed by the lower yoke 24, the magnet 26, and the upper yoke (not shown). When the coil 22 is disposed in the magnetic circuit unit, a voice coil motor which drives the rotary actuator 16 is formed. In the state shown in the drawing, the rotary actuator 16 is in a latched state wherein the magnetic head 18 is stored away from the magnetic disk 14 in a ramp load mechanism 20.

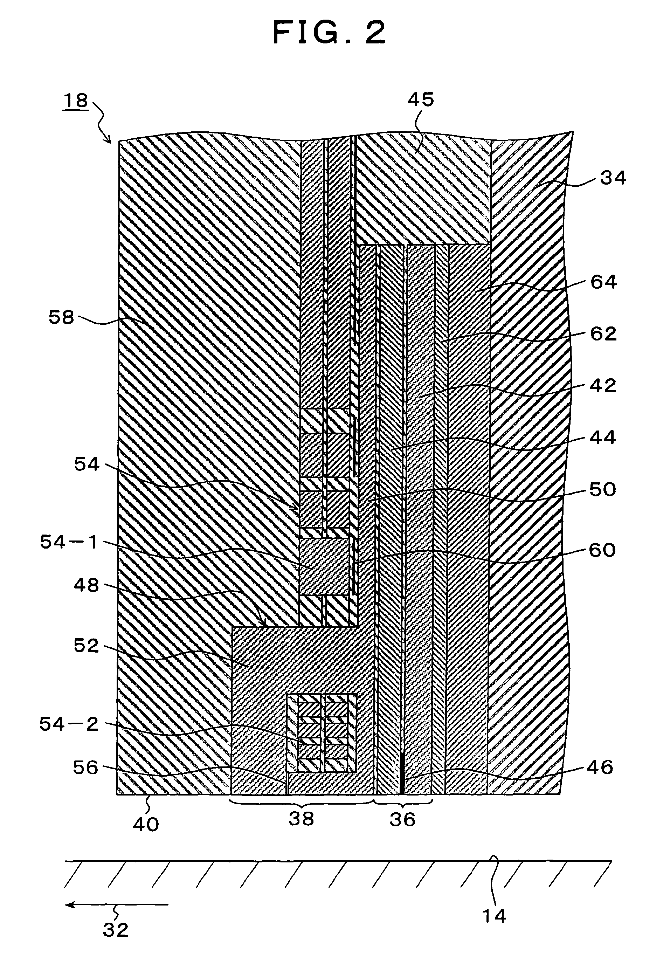

FIG. 2 is a cross sectional view showing an embodiment of the magnetic head according to the present invention. In FIG. 2, the magnetic head 18 of the present embodiment is provided at the distal end of a slider, and a read head 36 and a write head 38 are sequentially disposed subsequent to (formed sequentially on) a substrate 34. The magnetic head 18 has a medium facing surface 40 which faces a medium surface of the magnetic disk 14, and the medium facing surface 40 constitutes a part of an air bearing which floats when receiving an air flow generated by the movement of the magnetic disk 14 in a disk rotation direction 32 shown by an arrow.

In the read head 36 provided on the substrate 34 side, shield layers 42 and 44 are formed in an insulating layer 45 using aluminium oxide Al₂O₃ (alumina), a read element 46 is disposed at a position between the shield layer 42 and 44 which serves as a read gap of the medium facing surface 40, and a GMR element (Giant Magneto Resistance) or a TMR element (Tunneling Magneto Resistance) is used as the read element 46.

Adjacent to the read head 36, the write head 38 is provided. The write head 38 has a magnetic pole unit 48, and the magnetic pole unit 48 has an inner magnetic pole 50 adjacent the read head 36 and an outer magnetic pole 52 on the opposite side. As the magnetic pole unit 48, Permalloy or an iron-cobalt-alloy-based magnetic material is used. The outer magnetic pole 52 is exposed at the medium facing surface 40, protrudes toward the front, and forms a write gap 56 between the outer magnetic pole 52 and the inner magnetic pole 50 at the part of the medium facing surface 40.

A coil through unit is formed below the connecting part of the inner magnetic pole 50 and the outer magnetic pole 52, and a write coil 54 is spirally disposed around the connecting part of the inner magnetic pole 50 and the outer magnetic pole 52. The write coil 54 of the present embodiment has a double-wound structure. The write coil 54 generates magnetic flux for recording by causing a write current to flow therethrough. The magnetic flux extends to the magnetic disk 14 from the write gap 56 and magnetically records information on the magnetic disk 14.

Furthermore, in the magnetic head 18 of the present embodiment, when viewed from the write coil 54 in the write head 38, a heater coil 60 is disposed in the inner magnetic pole 50 side. The heater coil 60 is formed of a high-resistance heating material such as tungsten (W) or titanium tungsten (TiW). When heat is generated by electric current in the heater coil 60, the heat is transmitted to the write coil 54 which is facing the coil via the insulating layer 45, and the write coil 54 is caused to thermally expand, thereby causing the part of the medium facing surface 40 including the read element 46 and the write gap 56 which functions as a write element to bulge outward toward the magnetic disk 14.

In addition to the above basic configuration of the magnetic head 18, in the present embodiment, a low thermal conducting layer 62 is formed next to the shield layer 42 in the read head 36, and a low thermal expansion layer 64 is provided adjacent to the low thermal conducting layer 62. The heat of the heater coil 60 is transmitted to the substrate 34 and then conducted and dissipated toward the medium facing surface 40; therefore, the low thermal conducting layer 62 is disposed behind the shield layer 42 so as to block the transmission path of the heat from the heater coil 60 and suppresses transmission of the heat to the substrate 34 side. As a forming material of the low thermal conducting layer 62 which suppresses transmission of the heat in this manner, a material having a low thermal expansion coefficient such as silicon oxide SiO₂ or a resin material is used. The low thermal conducting layer 62 of the present embodiment has a thermal conductivity of 0.1 W/m to 1.5 W/m.

The low thermal expansion layer 64 which is formed next to the low thermal conducting layer 62 contains any one of silicon carbide SiC, silicon nitride Si₃N₄, silicon oxide Si02, aluminium nitride AlN, tungsten (W), molybdenum (M), and an invar material. In the present embodiment, the thermal expansion coefficient of the low thermal expansion layer 64 is 0.0/K to 7.5E-6/K (=0.0/K to 7.5x10⁻⁶K). The low thermal expansion layer 64 functions as a fixed layer in terms of thermal expansion coefficient even when it receives heat from the heater coil 60 since it has a low thermal expansion coefficient. When the low thermal expansion layer 64 which functions as a fixed layer is positioned in the substrate 34 side, it acts to suppress protrusion of the medium facing surface 40 caused by thermal expansion of the part in the distal end side having a high thermal expansion coefficient including the read head 36 and the write head 38. In other words, the low thermal conducting layer 62 suppresses transmission of the heat of the heater coil 60 to the substrate 34, and confines the heat to the write coil 54 side which determines the protruding distance of the medium facing surface 40. This increases the heater efficiency so that the protruding distance can be ensured by a low current in the heater coil 60.

Meanwhile, the low thermal expansion layer 64 acts as a fixed unit when receiving the heat of the heater coil 60 since the thermal expansion thereof is small, and suppresses distortion of the medium facing surface 40 in the area of the read head 36 and the write head 38; therefore, the low thermal expansion layer 64 tends to reduce the heater efficiency. However, the low thermal expansion layer 64 performs an action of suppressing protrusion of the medium facing surface 40 caused by heat generation when the electric power of the write coil 54 is large in a high-temperature state, thereby allowing a lower designed value of the clearance for avoiding collision due to irregularities of the magnetic disk 14 of the magnetic head 18.

More specifically, in the design stage of the magnetic head 18, with respect to the upper-limit temperature, for example 60°C, of usage temperature range of the magnetic disk apparatus, the temperature of the magnetic head 18 in the chassis can reach about 10°C higher than this, i.e. 70°C. In this high temperature state, worst-case conditions under which an AC current is caused to flow through the write coil 54 are set. From the protruding distance of the medium facing surface 40 under the worst-case conditions, the designed value of the clearance having a value at which collision does not occur in the clearance between the surface and the magnetic disk 14 is determined. However, in the present embodiment, due to the low thermal conducting layer 62, the heater efficiency, i.e., the degree of the protruding distance with respect to heat in the side of the read head 36 and the write head 38 is increased. Moreover, when the worst-case conditions in which recording power is the maximum at a high temperature are set, since diffusion of heat is suppressed by the low thermal conducting layer 62, the medium facing surface 40 in the area of the read head 36 and the write head 38 protrudes by a significant amount. Therefore, a large designed value of the clearance has to be set in consideration of the protruding distance of the medium facing surface 40 under the worst-case conditions.

However, when a large clearance designed value is set, the protruding distance in the case in which the medium facing surface 40 is caused to protrude by heat of the heater coil 60 in a normal usage state has to be also increased along with the increase in the clearance designed value. As a result, the electric power which flows through the heater coil 60 is increased, and the magnetic head 18 is locally caused to be at a high temperature, possibly causing migration of the heater coil 60, the read element 46 of the read head 36, or the write gap 56 which functions as a write element in the write head 38.

Therefore, in the present embodiment, as a result of disposing the low thermal expansion layer 64 alongside the low thermal conducting layer 62, the thermal expansion coefficient is reduced, the protruding distance of the medium facing surface 40 under the worst-case conditions is suppressed by the presence of the low thermal expansion layer 64. Thus, increasing the clearance designed value can be avoided, and the heater efficiency can be enhanced as a result. In the present embodiment, the low thermal conducting layer 62 has a thickness of about, for example, 0.5 µm to 4.0 µm, and the low thermal expansion layer 64 has a thickness of, for example, 0.5 µm to 4.0 µm.

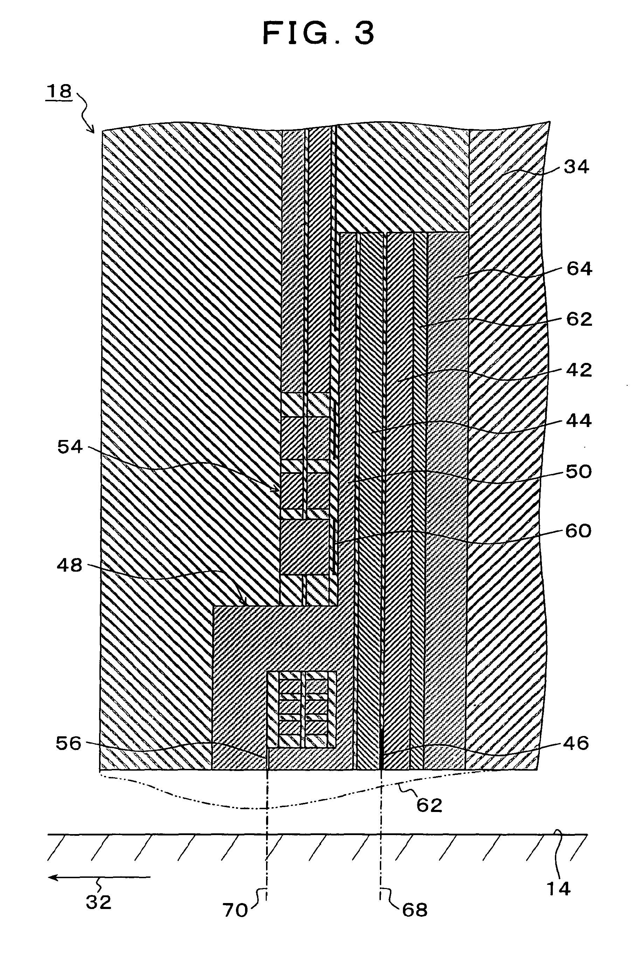

FIG. 3 is an explanatory drawing of a protruding state caused by thermal expansion when electric power is fed to the heater coil 60. In FIG. 3, when electric power is fed to the heater coil 60, the resultant heat is transmitted to the write coil 54, and the write coil 54 is heated and expanded. The transmission of the heat transmitted from the heater coil 60 to the substrate 34 side via the shield layers 44 and 42 is suppressed by the low heat conducting layer 62, and the heat is sealed in a head region in the distal end side when viewed from the low thermal conducting layer 62. As a result, the medium facing surface 40 of the magnetic head 18 forms a bulge 66 which protrudes toward the magnetic disk 14 side centrally from a write gap position 70 facing the write coil 54, a read gap position 68 where the read element 46 is disposed is similarly protruded, and the clearances from the write gap 56 and the read element 46 to the magnetic disk 14 can be controlled by the protruding distance of the bulge 66.

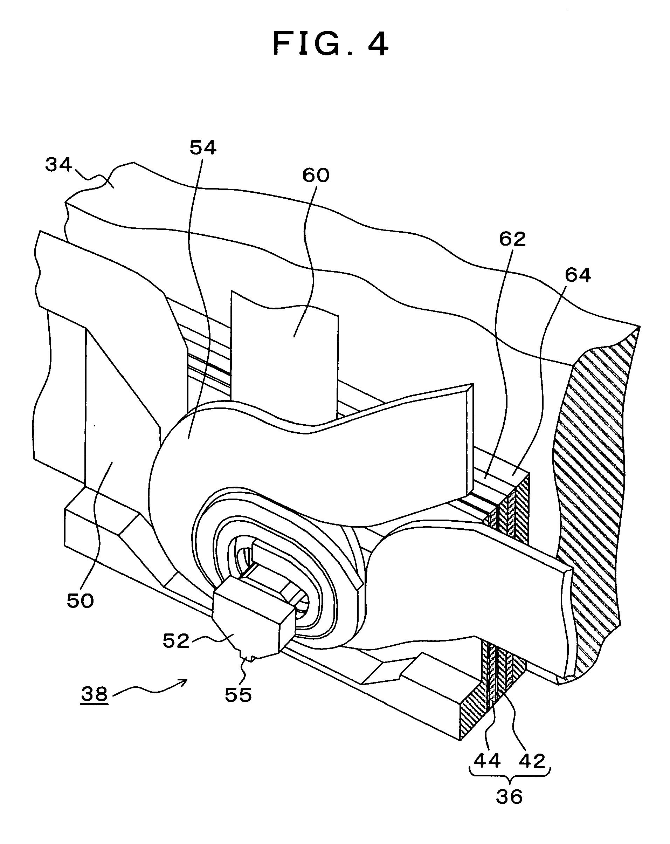

FIG. 4 is a perspective view showing an internal structure of the magnetic head 18 of the present embodiment, wherein the insulating layer is removed. In FIG. 4, on the front of the substrate 34, the inner magnetic pole 50 which constitutes the magnetic pole unit of the write head 38 is disposed via the read head 36 composed of the two shield layers 42 and 44, and the outer magnetic pole 52 is disposed in the part which protrudes toward the front from the inner magnetic pole 50. The outer magnetic pole 52 forms a distal end unit 55 in the medium facing surface for the magnetic disk, and the width of the distal end unit 55 determines the recording width in the magnetic disk. The write coil 54 is formed to be spirally double-wound between the outer magnetic pole 52 and the inner magnetic pole 50.

More specifically, the write coil 54 is led in from a front upper right part, spirally wound at the outer magnetic pole 52, then bent at the center to the side of the substrate 34, spirally wound in the same direction, and then led out to the right side. In addition to this basic configuration, a low thermal conducting layer 62 is positioned alongside the shield layer 42 in the substrate side of the read head 36, thereby suppressing transmission of the heat of the heater coil 60 to the substrate 34. Next to the low thermal conducting layer 62, the low thermal expansion layer 64 is provided. This functions as a fixed element since its thermal expansion is low, and suppresses protrusion of the medium facing surface in the region of the read head 36 and the write head 38 under the above worst-case conditions.

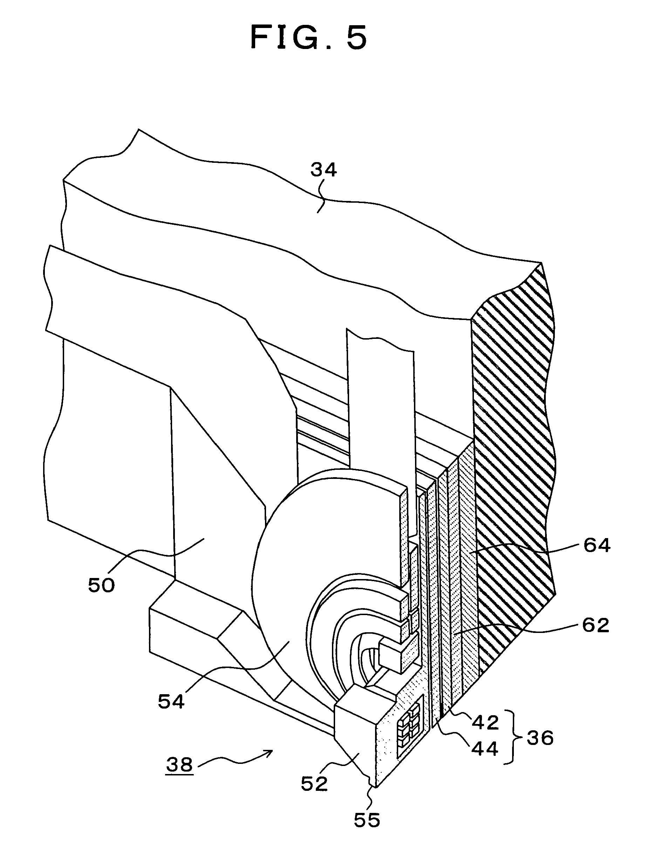

FIG. 5 is a cross sectional view through the centre of FIG. 4. As is clear from the cross sectional view of FIG. 5, it can be understood that the write coil 54 is disposed so that it is spirally double wound around the connecting unit which connects the outer magnetic pole 52 with the inner magnetic pole 50. In addition, the write gap 56 is formed inside the distal end unit 55 of the outer magnetic pole 52. Furthermore, the read element 46 is disposed between the shield layers 42 and 44 which are on the substrate 34 side, thereby forming the read head 36. Furthermore, in the basic shape of the magnetic head 18 composed of the read head 36 and the write head 38, the low thermal conducting layer 62 and the low thermal expansion layer 64 are stacked.

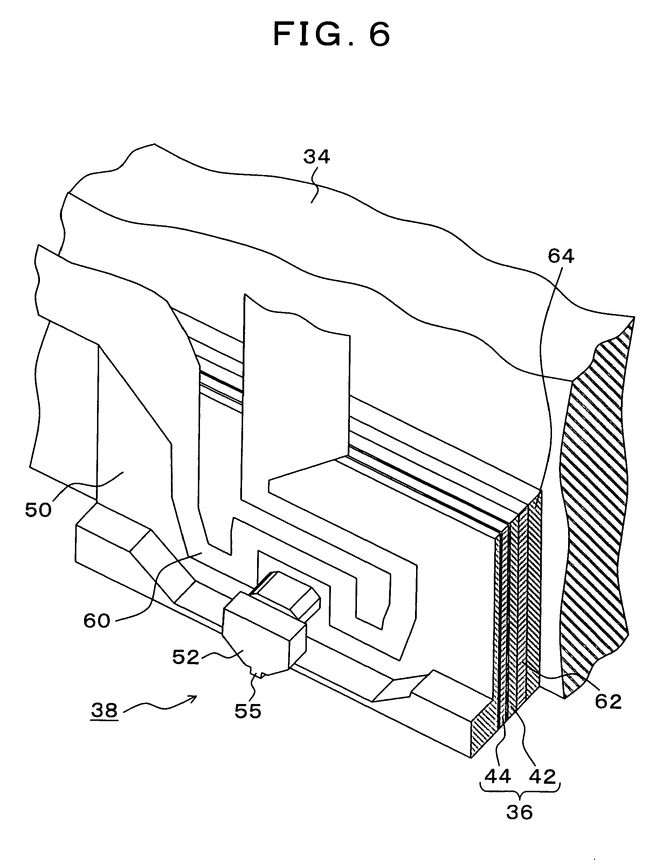

FIG. 6 is an explanatory drawing showing the internal structure without the write coil 54 of FIG. 4, thus revealing the heater coil 60. The heater coil 60 forms a coil pattern having a certain width at a position facing the write coil 54 shown in FIG. 4, and wide terminal patterns are connected to and led from both ends of the coil pattern.

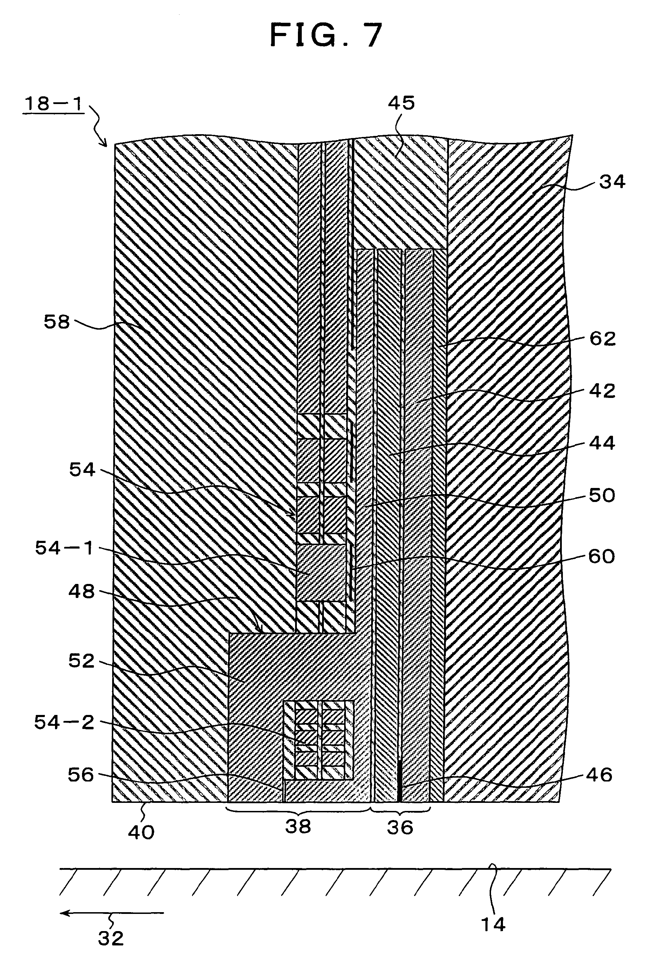

FIG. 7 is a cross sectional view showing another embodiment of the magnetic head according to the present embodiment in which merely the low thermal conducting layer is added to the basic configuration of the magnetic head. In the embodiment of FIG. 7, the configuration of the read head 36 and the write head 38 disposed in the distal end side of the substrate 34 is same as the embodiment of FIG. 2, the heater coil 60 is similarly disposed in the substrate 34 side of the write coil 54, and the medium facing surface 40 is arranged such that it is caused to protrude toward the magnetic disk 14 side by electric power distribution to and heating of the heater coil 60. Next to the shield layer 42 in the substrate 34 side of the read head 36, merely the low thermal conducting layer 62 is disposed. Therefore, the embodiment of FIG. 7 in which merely the low thermal conducting layer 62 is disposed in the basic shape can be referred to as an embodiment which is mainly intended to improve the heater efficiency which increases the protruding distance of the medium facing surface 40 with a small electric power amount of the heater coil 60.

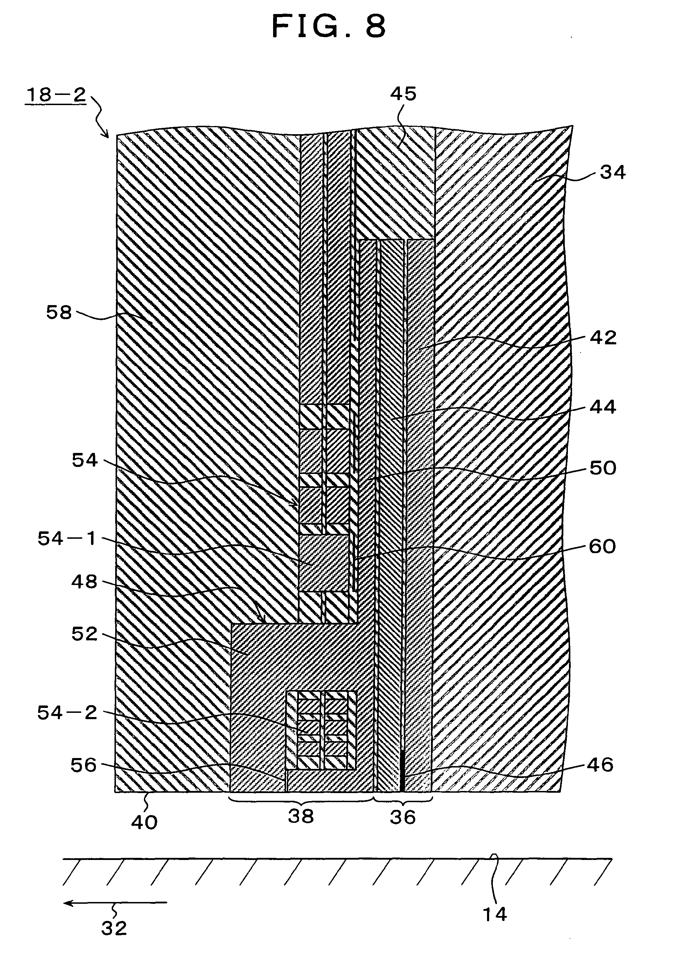

FIG. 8 is a cross sectional view showing, as a comparative example, a magnetic head of the basic shape not having the low thermal conducting layer and the low thermal expansion layer. In this magnetic head 18-2 of FIG. 8 shown as a comparative example, the read head 36 and the write head 38 are provided adjacent to the substrate 34, and this structure is same as the embodiment of FIG. 2.

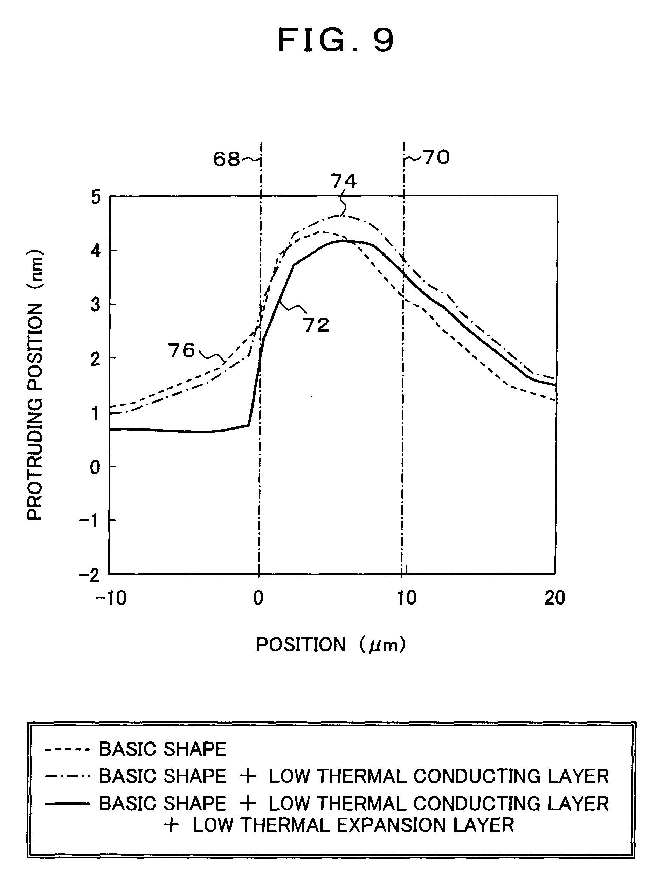

FIG. 9 is an explanatory drawing showing, in comparison with a comparative example, measurement results of protruding positions in the present embodiment in the high-temperature electric-power-distributed state, i.e. the worst-case conditions. When the usage temperature range of the magnetic disk apparatus is, for example, 0°C to 60°C, the temperature of the magnetic head is 10°C to 70°C, i.e. around 10°C higher, therefore, the high-temperature electric-power-distributed state in FIG. 9 is the state in which the highest environmental temperature of the magnetic head is 70°C, and AC current which provides maximum power as a recording current which flows through the write coil is caused to flow therethrough; and, the measurement results are those at the protruding positions when no electric power flows in the heater coil. In FIG. 9, the horizontal axis represents positions of the medium facing surface 40 of the magnetic head; wherein the read gap position 68 is assumed to be 0 um, the distal end side in which the write gap position 70 of the write head is positioned is shown as positive, and the substrate side is shown as negative. Also, the vertical axis represents protruding positions (amounts), wherein positions of the medium facing surface in a room-temperature state is assumed to be 0 nm, and protruding positions in the high-temperature electric-power-distributed state are shown. A protruding position profile 72 is that of the case in which the low thermal conducting layer 62 and the low thermal expansion layer 64 shown in FIG. 2 are disposed.

In negative positions in the substrate side the protruding distances are 1 nm or less which are very small. However, the protruding distance is rapidly increased when the position approaches the read gap position 68, the distance is increased to near 4.0 nm as a peak protruding distance before the write gap position 70, the protruding position is then lowered toward the head distal end side in the positive side, and a protruding distance of about 3.5 nm is obtained at the write gap position 70. A protruding position profile 74 shown by a chain line is that of the case of the embodiment in which merely the low thermal conducting layer 62 shown in FIG. 7 is provided, and the low thermal expansion layer is not. In this case, as a result of providing the low thermal conducting layer 62, diffusion of heat to the substrate side is suppressed, and the heat is sealed in the distal end side. As a result, the peak protruding distance is increased to 4.6 nm, wherein the ratio of the protruding distance with respect to the heat is large without driving the heater coil.

On the other hand, a protruding position profile 76 shown by a dotted line is a comparative example of a magnetic head not having the low thermal conducting layer and the low thermal expansion layer of FIG. 8, and the protruding positions thereof are approximately between the protruding position profile 72 of the embodiment in which the low thermal conducting layer and the low thermal expansion layer are provided and the protruding position profile 74 of the magnetic head only having the low thermal conducting layer.

According to comparison with such protruding position profile 76 serving as a comparative example, it can be understood that, when the low thermal conducting layer is provided, the variation of protrusion amount with temperature is large like the protruding position profile 74. Regarding the protruding position profile 72 in which the low thermal expansion layer is added in addition to the low thermal conducting layer, it can be understood that the protruding distance is suppressed overall since the low thermal expansion layer is provided. Therefore, according to the protruding position profile 72 of the embodiment in which both the low thermal conducting layer and the low thermal expansion layer of FIG. 2 are provided, the protruding distances of the medium facing surface of the head under the worst-case conditions (high-temperature, high electric-power) are suppressed to low values compared with the protruding position profile 74 of the embodiment of the low thermal conducting layer and the protruding position profile 76 serving as a comparative example. Therefore, when the designed value of the clearance under the worst conditions is to be determined, a minimum designed value of the clearance can be set.

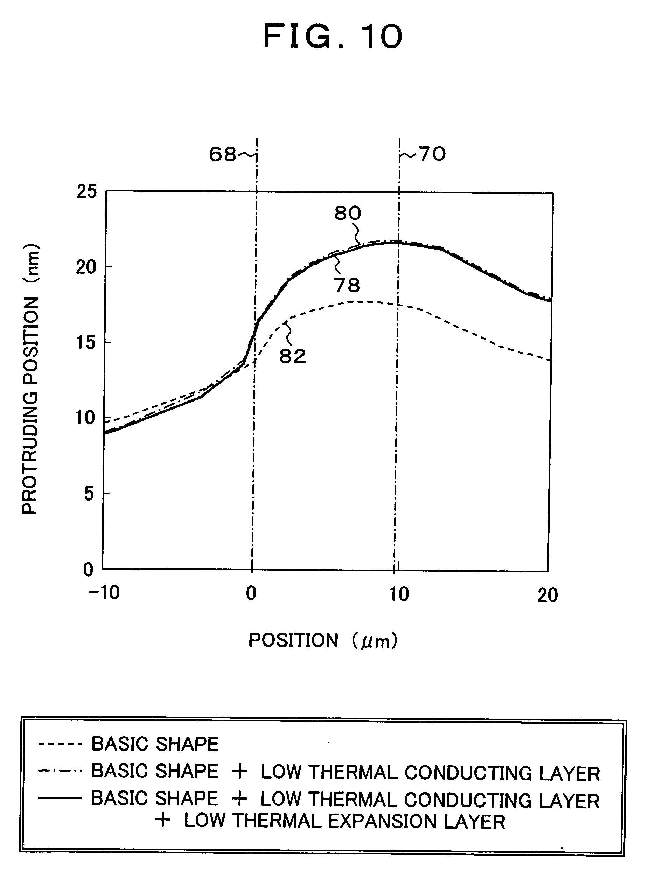

FIG. 10 is an explanatory drawing showing, in comparison with a comparative example, the protrusion effect in the present embodiment when the heater coil is supplied with 100 mW in the high-temperature electric-power-distributed state of FIG. 9. In FIG. 10, a protruding position profile 78 shown by a solid line is in the case in which both the low thermal conducting layer and the low thermal expansion layer of FIG. 2 are provided, a protruding position profile 80 is in the case of FIG. 7 in which merely the low thermal conducting layer is provided, and a protruding position profile 82 of a broken line is the comparative example of FIG. 8.

Regarding the protrusion due to heater electric power distribution, in both the protruding position profile 78 of the embodiment of FIG. 2 and the protruding position profile 80 of the embodiment of FIG. 7, conduction of heat to the substrate side is suppressed by the low thermal conducting layer. A protruding amount of about 17 nm is ensured at the read gap position 68, and an amount of about 22 nm corresponding to approximately peak values are ensured at the write gap position 70.

On the other hand, in the protruding position protruding position profile 82 according to the comparative example having neither the low thermal conducting layer nor the low thermal expansion layer, it is about 18 nm at the read gap position 68, and about 17.5 nm at the write gap position 70. In comparison to the protruding position profile 82 serving as the comparative example, in both the embodiment of FIG. 2 and the embodiment of FIG. 7, sufficiently large head protruding distances with respect to the same heater electric power distribution amount are obtained.

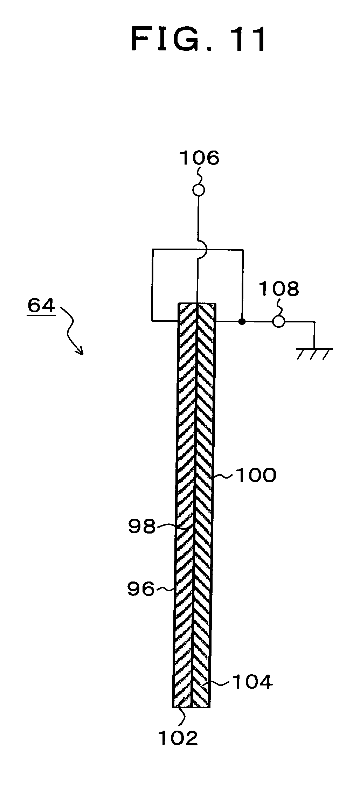

FIG. 11 is an explanatory drawing of an embodiment in which a piezoelectric sensor structure using aluminium nitride AlN in the low thermal expansion layer in the embodiment of FIG. 2 is used as a collision sensor. FIG. 11 focuses on and shows the low thermal expansion layer 64 of FIG. 2. The low thermal expansion layer 64 of the present embodiment realizes the piezoelectric sensor structure by interposing aluminium nitride layers 102 and 104 between electrodes 96, 98, and 100. The electrodes 96 and 100 are connected to earth by a ground terminal 108, and the electrode 98 at the center is connected to a signal output terminal 106 and led outside. The piezoelectric sensor comprises a stacked structure of the aluminium nitride layers 102 and 104 and the electrodes 96, 98, and 100 performs C-axis orientation of thin films of aluminium nitride for the aluminium nitride layers 102 and 104 so as to retain the piezoelectric property thereof. These layers are formed on the electrodes 96 and 98 serving as metal foil. Such a low thermal expansion layer 64 is caused to have the piezoelectric sensor structure.

As a result, when clearance control is performed by distorting the medium facing surface 40 to form the bulge shape 66 by electric power in the heater coil as shown in FIG. 3, and when collision occurs due to irregularities on the medium surface of the magnetic disk 14, the impact due to this collision is applied to the piezoelectric sensor structure which constitutes the low thermal expansion layer 64, and an impact-corresponding voltage according to the collision caused by a piezoelectric action can be output to outside from the signal output terminal 106.

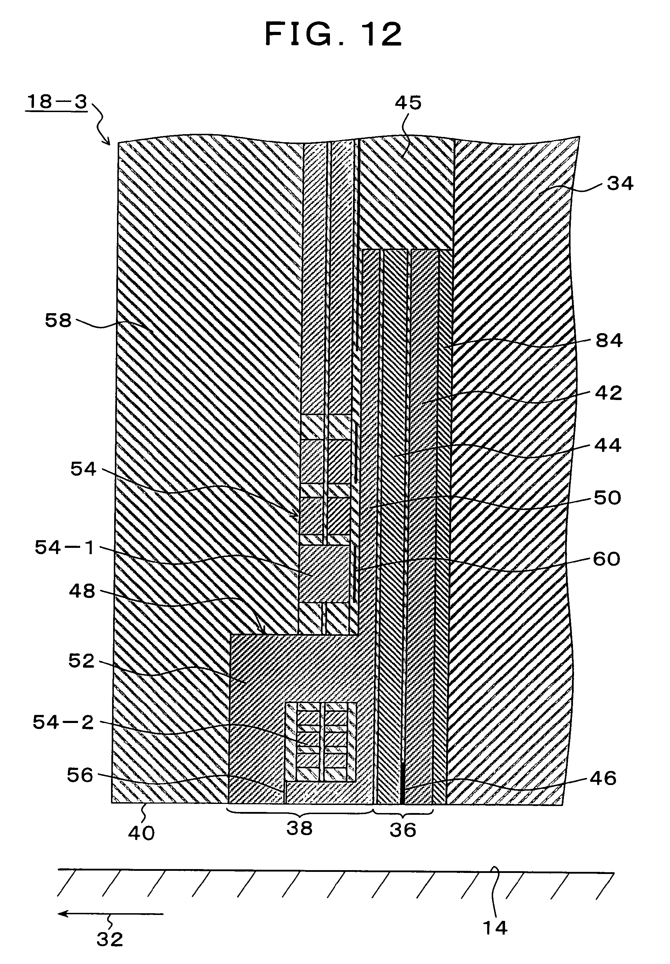

FIG. 12 is a cross sectional view of another embodiment according to the present invention in which a low Young's modulus layer is disposed. In FIG. 12, in a magnetic head 18-4 of the present embodiment, the read head 36 and the write head 38 are provided at the front side relative to the substrate 34, the structure of the read head 36 and the write head 38 is same as the embodiment of FIG. 2, and the heater coil 60 for controlling the protruding distance of the medium facing surface 40 by thermal expansion is similarly disposed.

In the basic shape which comprises the read head 36 and the write head 38, in the present embodiment, the low Young's modulus layer 84 is disposed adjacent to the shield layer 42 in the substrate 34 side in the read head 36, and it is connected to the substrate 34 via the low Young's modulus layer 84. The low Young's modulus layer 84 is made of a material having a low Young's modulus which can be readily deformed by thermal expansion due to heat of the heater coil 60. As the low Young's modulus layer 84, a material having a Young's modulus which is lower than the Young's module of the layers constituting the read head 36 and the write head 38 by one figure (factor of ten) or two figures or more such as resist, polyimide, or amorphous fluorocarbon polymer is used. The low Young's modulus layer 84 of the present embodiment has a Young's modulus of 1 GPa to 50 GPa. The low Young's modulus layer 84 has a thickness of, for example, 0.4 µm to 4.0 µm.

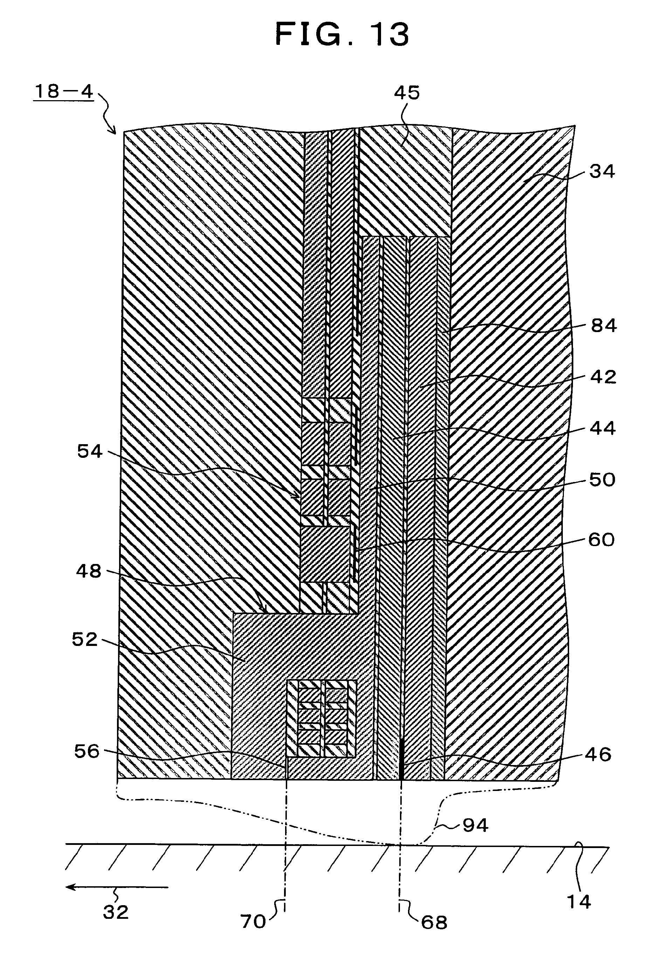

FIG. 13 is an explanatory drawing of a protrusion effect caused by thermal expansion when current flows in the heater coil 60 of the embodiment of FIG. 12. The magnetic head 18-4 of the present embodiment is for a contact-type magnetic head which performs write and read in the state in which the medium facing surface 40 is always in contact with the medium surface of the magnetic disk 14. This contact-type magnetic head 18-4 is characterized in that the medium facing surface 40 is locally protruded as shown by a bulge shape 94 by thermal expansion caused by electric current flowing in, and consequent heating of, the heater coil 60. More specifically, the protruding distance reaches a peak value at the read gap position 68, and the bulge portion 94 is brought into contact with the magnetic disk 14 and is protruded to a very close position, although it is not brought into contact, at the write gap position 70 positioned in the front side.

When contact with the magnetic disk 14 is to be maintained by protruding it by thermal expansion caused by the heater coil 60, in the rotary actuator 16 shown in FIG. 1 which supports the magnetic head 18-4, the bulge 94 is desired to be in contact with the medium surface in the state in which little pressing load is generated, and such contact state is maintained by the balance of the rotary actuator. However, in the flying-type magnetic head, for example as shown in FIG. 3, the entire part including the write gap position 70 and the read gap position 68 of the medium facing surface 40 is protruded by electric power distribution to and heating of the heater coil 60. When, in this thermal expansion state, the head is brought into contact with the medium surface of the magnetic disk 14, the relative area of the bulge adjacent to the medium surface is increased.

In the magnetic head 18-4 as shown in FIG. 12, the distance between the head side and the magnetic disk 14 side is in a contact state, and this contact state is in the dimension in which the atomic force which is so-called Coulomb's force acts between atoms thereof. Therefore, when the medium facing surface 40 is entirely protruded by expansion like the conventional flying-type head of FIG. 8, the area facing the disk surface which is caused by protrusion is increased, the balance of the rotary actuator in which the contact force is caused to be approximately zero is broken due to increase in the Coulomb's force accompanying increase in the area, and the head is pressed against the disk surface by a strong force by protrusion contact caused by the heater coil; thus, failure like head wear, wear of the disk surface, or the like is generated, and durability is deteriorated. On the other hand, in the embodiment of FIG. 12, the low Young's modulus layer 84 is provided; therefore, as shown in the heating electric-power-distributed state of FIG. 13, the bulge shape 94 in which the substrate 34 side serves as a fixed side and the distal end side divided from the low Young's modulus layer 84 is largely protruded can be formed, and the relative area with respect to the magnetic disk 14 is reduced to suppress increase in the Coulomb's force, thereby maintaining the balance of the rotary actuator which maintains the medium contact of the magnetic head.

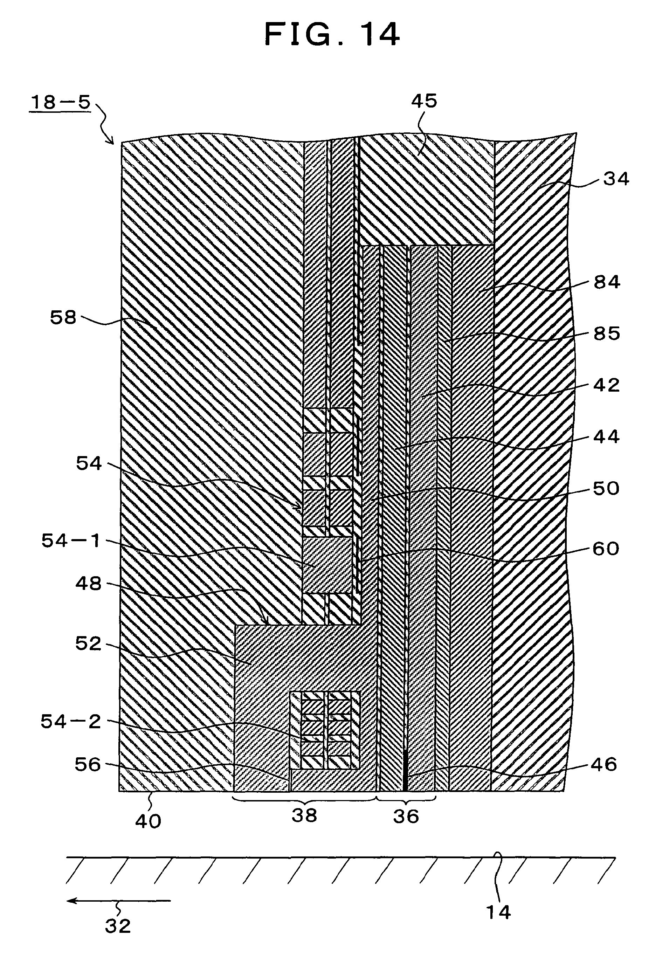

FIG. 14 is a cross sectional view of another embodiment according to the present invention, wherein a low thermal expansion layer is disposed subsequent to the low Young's modulus layer. In FIG. 14, in a magnetic head 18-5 of the present embodiment, although the point that the low Young's modulus layer 84 is disposed subsequent to the shield layer 42 is same as the embodiment of FIG. 12, the low thermal expansion layer 94 is further disposed subsequent to the low Young's modulus layer 84 and between the layer and the substrate 34. The low thermal expansion layer 94 has a low expansion coefficient when receiving conduction of heat caused by electric power distribution to the heater coil 60; therefore, the low thermal expansion layer functions as a fixed unit which is not greatly deformed with respect to the low Young's modulus layer 84, thereby relatively increasing local protrusion around the read head 36 and the write head 38. The structure otherwise is the same as the embodiment of FIG. 12.

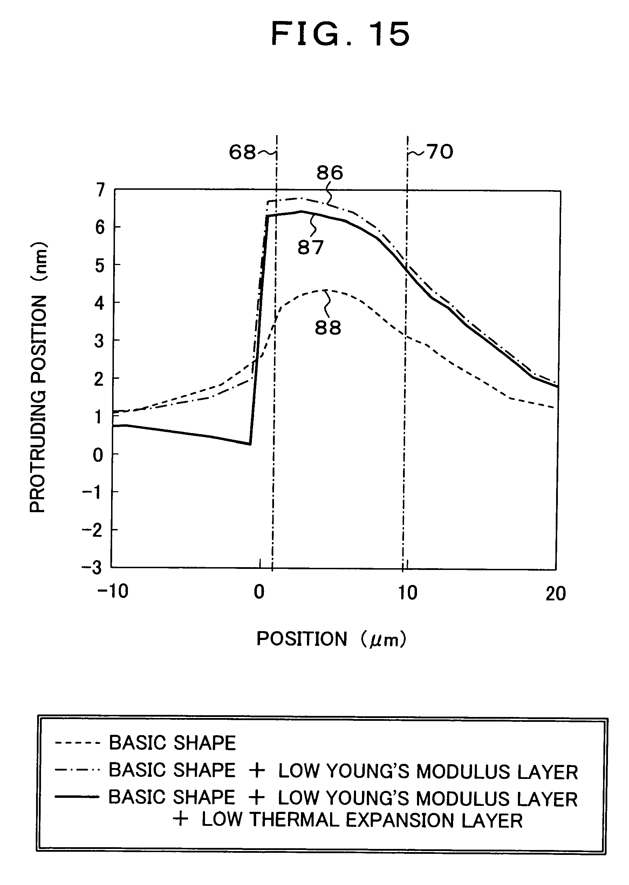

FIG. 15 is an explanatory drawing showing, in comparison with the comparative example of FIG. 8, amounts of protrusion in the embodiments of FIG. 12 and FIG. 14 in the high-temperature, high-electric-power state (the worst-case conditions). In FIG. 15, a protruding position profile 88 is in the case of FIG. 12 in which the low Young's modulus layer is disposed in the basic shape, a protruding position profile 87 is in the case of FIG. 14 in which the low Young's modulus layer and the low thermal expansion layer are provided, and a protruding position profile 86 is the case of the comparative example of FIG. 7 in which the low Yong's modulus layer is not provided. As is clear from the protruding position profiles of FIG. 15 in the high-temperature electric-power-distributed state, the head position is entirely protruded in the protruding position profile 88 of merely the basic shape not having the low Young's modulus layer; however, in the protruding position profile 86 of the embodiment of FIG. 12 in which the low Young's modulus layer is provided, the protruding distance rises approximately linearly and reaches the vicinity of a peak protruding distance 6.8 nm before the read gap position 68, and then, the distance is gradually reduced as it reaches the head distal end.

Furthermore, in the protruding position profile 87 of the embodiment of FIG. 14 in which the low Young's modulus layer and the low thermal expansion layer are provided, the protruding distance is changed to the negative side before the read gap position 68, then approximately linearly rises to reach the vicinity of a peak protruding distance of 6.3 nm, and is then gradually reduced as it approaches the head distal end; thus, the effect is caused of increasing local deformation by providing the low thermal expansion layer.

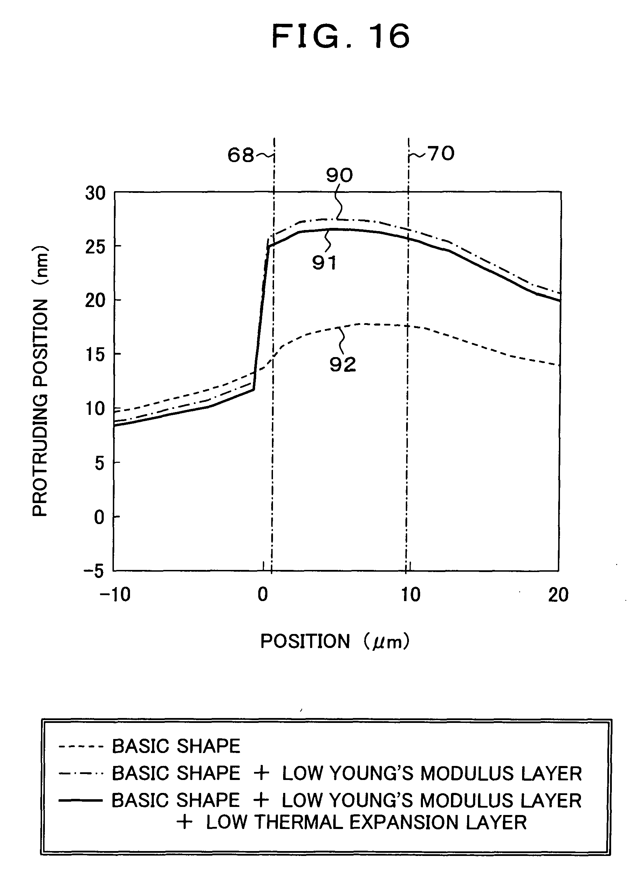

FIG. 16 shows, in comparison with the comparative example of FIG. 7, the protrusion effect in the embodiments of FIG. 12 and FIG. 14 when the heater coil is heated by distributing 100 mW of electric power in the high-temperature electric-power-distributed state of FIG. 15. In FIG. 16, a protruding position profile 90 is in the case of FIG. 12 in which the low Young's modulus layer is provided, a protruding position profile 91 is in the case of FIG. 14 in which the low Young's modulus layer and the low thermal expansion layer are provided, and a protruding position profile 92 is in the case of the comparative example of FIG. 7 in which the low Young's modulus layer is not provided.

As is clear from the measurement results of the protruding positions of FIG. 16, when the low Young's modulus layer 84 is provided, the distance is approximately linearly increased before the read gap position 68 as shown in the protruding position profile 90 by heating of the heater coil caused by electric power distribution thereto, and it is then gradually increased and reduced. When the low Young's modulus layer and the low thermal expansion layer are provided, the distance is approximately linearly increased before the read gap position 68 as shown in the protruding position profile 91 by heating the heater coil, wherein deformation is suppressed since the low thermal expansion layer is provided, and the protruding distance is comparatively lower than the protruding position profile 90 in which the low Young's modulus layer 84 is provided.

By virtue of such local protruding position profiles, the relative area accompanying contact with the disk medium wherein the Coulomb's force of the read gap position 68 and the write gap position 70 is a problem can be significantly reduced, and the contact balance achieved by the balance of the rotary actuator in the contact-type magnetic head can be maintained.

The embodiments of FIG. 12 and FIG. 14 show a contact-type magnetic head as examples; however, since the local protruding profiles can be applied, the head structure in which the low Young's modulus layer 84 is similarly disposed may be employed also in a flying-type magnetic head and a near contact-type magnetic head. The present invention is not limited to the above described embodiments and includes any modifications that do not impair the advantages thereof. Furthermore, the present invention is not limited by the numerical values shown in the above described embodiments.

## Claims

1. A magnetic head in which a read head in which a reading element which converts recording magnetic flux emitted from a recording medium into an electric signal is disposed between a pair of shield layers and a write head which magnetically records information by emitting magnetic flux generated by a write current flowing through a write coil from a magnetic pole unit to the recording medium are sequentially disposed on a substrate; the magnetic head **characterized by** having
a heater coil which is disposed via an insulating layer with respect to the write coil and causes a medium facing surface to protrude toward the recording medium side by thermal expansion caused by electric power distribution and heating;
a low thermal conducting layer which is disposed subsequent to the shield layer in the substrate side in the read head and is made of a material having a low thermal conductivity which suppresses transmission of heat caused by electric power distribution to and heating of the heater coil; and
a low thermal expansion layer which is disposed in the substrate side of the low thermal conducting layer and is made of a material having a low thermal expansion coefficient.

2. The magnetic head described in claim 1 **characterized in that** the low thermal conducting layer comprises silicon oxide (SiO₂) or a resin material.

3. The magnetic head described in claim 1 or 2, **characterized in that** the low thermal expansion layer comprises at least any one of silicon carbide (SiC), silicon nitride (Si₃N₄), silicon oxide (SiO₂), aluminium nitride (AlN), tungsten (W), molybdenum (M), and an invar material.

4. The magnetic head described in claim 1, 2, or 3, **characterized in that** the low thermal expansion layer forms a piezoelectric sensor structure by disposing aluminium nitride layers between electrodes.

5. The magnetic head described in claim 1, 2, 3, or 4, **characterized in that** the low thermal expansion layer has a thermal expansion coefficient of 0.0/K to 7.5E-6/K.

6. The magnetic head described in any preceding claim, **characterized in that** the low thermal conducting layer has a thermal conductivity of 0.1 W/m to 1.5 W/m.

7. A magnetic head in which a read head in which a reading element which converts recording magnetic flux emitted from the recording medium into an electric signal is disposed between a pair of shield layers and a write head which magnetically records information by emitting magnetic flux generated by a write current flowing through a write coil from a magnetic pole unit to the recording medium are sequentially disposed on a substrate; the magnetic head **characterized by** having
a heater coil which is disposed to face the write coil via an insulating layer and causes a medium facing surface to protrude toward the recording medium side by thermal expansion caused by electric power distribution and heating; and
a low thermal conducting layer which is disposed subsequent to the shield layer in the substrate side in the read head and is made of a material having a low thermal conductivity which suppresses transmission of heat caused by electric power distribution to and heating of the heater coil.

8. The magnetic head described in claim 7 **characterized in that** the low thermal conducting layer comprises silicon oxide (SiO₂) or a resin material.

9. The magnetic head described in claim 7 or 8, **characterized in that** the low thermal conducting layer has a thermal conductivity of 0.1 W/m to 1.5 W/m.

10. A magnetic head in which a read head in which a reading element which converts recording magnetic flux emitted from a recording medium into an electric signal is disposed between a pair of shield layers and a write head which magnetically records information by emitting magnetic flux generated by a write current flowing through a write coil from a magnetic pole unit to the recording medium are sequentially disposed on a substrate; the magnetic head **characterized by** having
a heater coil which is disposed via an insulating layer with respect to the write coil and causes a medium facing surface to protrude toward the recording medium side by thermal expansion caused by electric power distribution and heating; and
a low Young's modulus layer which is disposed subsequent to the shield layer in the substrate side in the read head and made of a material which is readily deformed by thermal expansion and has a low Young's modulus.

11. The magnetic head described in claim 10 **characterized by** further having a low thermal expansion layer which is disposed in the substrate side of the low Young's layer and made of a material having a low thermal expansion coefficient.

12. The magnetic head described in claim 10 or 11, **characterized in that** the low Young's modulus layer comprises any of resist, polyimide, and amorphous fluorocarbon polymer.

13. The magnetic head described in claim 10, 11, or 12, **characterized in that** the low Young's modulus layer has a Young's modulus of 1 GPa to 50 GPa.

14. The magnetic head described in any of claims 10 to 13, **characterized in that** the low Young's modulus layer maintains a contact state with the medium by causing the medium facing surface including the reading element and the recording element to locally protrude with respect to the substrate side by electric power distribution to and heating of the heater coil.
